(19) Europäisches Patentamt
European Patent Office
Office européen des brevets

(11) **EP 2 790 044 B1**

(12) **EUROPEAN PATENT SPECIFICATION**

(45) Date of publication and mention
of the grant of the patent:
**06.03.2019 Bulletin 2019/10**

(21) Application number: **12856342.6**

(22) Date of filing: **05.12.2012**

(51) Int Cl.:
***G02B 5/30*** *(2006.01)*  ***G02F 1/1335*** *(2006.01)*
***G02B 5/18*** *(2006.01)*

(86) International application number:
**PCT/KR2012/010491**

(87) International publication number:
**WO 2013/085283 (13.06.2013 Gazette 2013/24)**

(54) **POLARIZATION SEPARATION ELEMENT**

POLARISATIONSTRENNUNGSELEMENT

ÉLÉMENT DE SÉPARATION À POLARISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.12.2011 KR 20110128919**

(43) Date of publication of application:
**15.10.2014 Bulletin 2014/42**

(73) Proprietor: **LG Chem, Ltd.
Seoul 150-721 (KR)**

(72) Inventors:
• **KIM, Tae Su**
  **Daejeon 301-778 (KR)**
• **KIM, Jae Jin**
  **Daejeon 305-810 (KR)**
• **LEE, Jong Byung**
  **Daejeon 301-817 (KR)**
• **PARK, Jeong Ho**
  **Daejeon 305-509 (KR)**
• **JUNG, Jin Mi**
  **Daejeon 302-740 (KR)**
• **SHIN, Bu Gon**
  **Daejeon 305-746 (KR)**

(74) Representative: **Goddar, Heinz J.
Boehmert & Boehmert
Anwaltspartnerschaft mbB
Pettenkoferstrasse 22
80336 München (DE)**

(56) References cited:
KR-A- 20030 097 839    KR-A- 20100 049 766
KR-A- 20100 118 539    KR-B1- 100 323 731
KR-B1- 100 751 597     US-A1- 2007 183 025
US-A1- 2009 041 971

**Description**

**[Technical Field]**

The present application relates to a polarization separation element, a method for manufacturing the polarization separation element, a light irradiating device, a method for irradiating light, and a method for manufacturing a photo-alignment film.

**[Background Art]**

A liquid crystal alignment film used for aligning liquid crystal molecules in a certain orientation has been applied in various fields. As an example of a liquid crystal alignment film, there is a photo-alignment film capable of aligning adjacent liquid crystal molecules as a surface treated by irradiation of light. Typically, a photo-alignment film can be manufactured by, for example, irradiating linearly polarized light to a layer of a photosensitive material and orientationally ordering the photosensitive material in a certain orientation.

In order to irradiate linearly polarized light to the photo-alignment film, various kinds of polarization separation elements can be used.

For example, as the polarization separation element, Korean Patent Laid-open Publication No. 2002-0035587 (Patent Document 1) describes a polarization separation element using aluminum.

Further, generally, in an ultraviolet ray polarization separation element for polarizing light in an ultraviolet ray region, a wire grid pattern having a pitch of 120 nm or less may be formed.

**[Disclosure]**

**[Technical Problem]**

The present application provides a polarization separation element, a method for manufacturing a polarization separation element, a light irradiating device, a method for irradiating light, and a method for manufacturing a photo-alignment film.

**[Technical Solution]**

As an example, a polarization separation element may include: a substrate; and an unevenness formed on the substrate and may generate linearly polarized light having a wavelength in an ultraviolet ray region. The term "ultraviolet ray region" used in the present specification means a region of lights having a wavelength of, for example, 250 to 350 nm, 270 to 330 nm, and 290 to 310 nm. Hereinafter, the polarization separation element will be explained in detail with reference to the accompanying drawings.

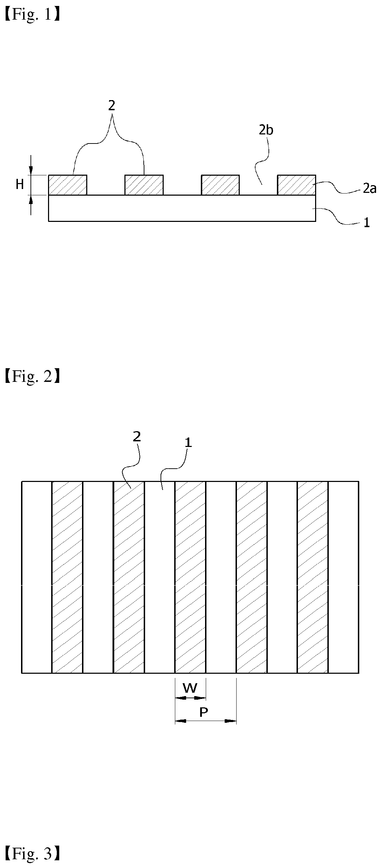

FIG. 1 is a schematic diagram illustrating a cross section of a polarization separation element example, FIG. 2 is a schematic diagram illustrating an upper surface of a polarization separation element example, and FIG. 3 is a photo of a polarization separation element example when viewed from the top. As illustrated in FIGS. 1 and 2, the polarization separation element may include a substrate 1 and an unevenness 2 formed on the substrate.

The term "unevenness" used in the present specification means a structure in which stripe-shaped patterns comprising one or more convex portions 2a and concave portions 2b are arranged so as to be parallel to each other (see FIG. 2). The term "pitch P" used in the present specification means a sum of a width W of the convex portion 2a and a width of a concave portion 2b (see FIG. 2). The term "height" used in the present specification means a height H of the convex portion (see FIG. 1).

As shown in FIG. 1, the polarization separation element example may include the unevenness 2, and the unevenness may include the convex portions 2a and the concave portions 2b. The convex portions 2a may contain silicon. The silicon has a light absorption characteristic unlike aluminum which is a reflecting material. Therefore, if the silicon is used as a material of the convex portion 2a, it is possible to polarize light in an ultraviolet ray region without being limited by a pitch of the convex portion 2a. That is, when the convex portion 2a contains the silicon, in a light wavelength region of 250 nm to 350 nm, a refractive index is in a range of 1 to 10 and an extinction coefficient is in a range of 0.5 to 10. Thus, if light in an ultraviolet ray region is polarized, dependency of the pitch P may be lower than that of a reflecting material such as aluminum. Further, in order to polarize light having a short wavelength in an ultraviolet ray region, the pitch P of the convex portion 2a made of the silicon material may be in a range of, for example, 50nm to 150nm, 110 nm to 150 nm, 120 nm to 150 nm, 130 nm to 150 nm, or 140 nm to 150 nm. If the pitch P exceeds 200 nm about a half a wavelength of a 400 nm light wavelength region, polarization separation may not occur in the ultraviolet ray region. Furthermore, the convex portion 2a is made of the silicon material, since the silicon material has a high oxidation temperature of about 800°C, it is possible to obtain a polarization separation element having excellent thermal stability and durability. Therefore, it is possible to prevent oxidation caused by heat generated from a backlight or a light source, and particularly heat from an ultraviolet ray when the light in an ultraviolet ray region is polarized. Thus, the polarization separation element is not deformed and maintains a superior polarization degree. Since the convex portion 2a has the refractive index and the extinction coefficient in the above-described ranges, the convex portion 2a has an excellent ultraviolet ray absorption power and has a superior extinction ratio even with a short wavelength as compared with aluminum. Therefore, it is possible to manufacture a polarization separation element having a superior ultraviolet ray polarization degree by using the silicon material.

Moreover, the silicon material contained in the convex portion 2a may be silicon (Si) and may be silicon (Si) doped with, for example, but not limited to, boron, carbon, nitrogen, aluminum, phosphorous, gallium, germanium, arsenic, chrome, nickel, or the like.

In an example, a dielectric material may be present in the concave portion of the unevenness. The dielectric material example may have a refractive index of 1 to 3 with respect to light having a wavelength of 250 nm to 350 nm. The dielectric material is not particularly limited as long as it has a refractive index in the above-described range and may include, for example, a silicon oxide, a magnesium fluoride, a silicon nitride, or air. In an example, if the dielectric material is air, the concave portion of the unevenness may be a substantially empty space.

In an example, the ultraviolet ray polarization separation element may have a ranging from 0.74 to 10 and b ranging from 0.5 to 10 calculated by Equation 1 below.

$$[\text{Equation 1}]$$

$$(a+bi)^2 = n_1^2 \times (1-W/P) + n_2^2 \times W/P$$

In Equation 1, i represents an imaginary unit, $n_1$ represents a refractive index of the dielectric material with respect to light having any one wavelength in an ultraviolet ray region of 250 nm to 350 nm, for example, light having a wavelength of 300 nm, $n_2$ represents a refractive index of the convex portion 2a with respect to light having any one wavelength in an ultraviolet ray region of 250 nm to 350 nm, for example, light having a wavelength of 300 nm, W represents a width of the convex portion 2a, and P represents a pitch of the convex portion 2a.

If the pitch P of the convex portion 2a of the unevenness 2 satisfies Equation 1, even with the pitch P of 120 nm or more, it is possible to obtain a polarization separation element having a high polarization degree of 0.5 or more, 0.6 or more, 0.7 or more, and 0.9 or more in a short wavelength region, for example, a light wavelength region of 250 nm to 350 nm. The upper limit of the polarization degree is not particularly limited but may be 0.98 or less, 0.95 or less, or 0.93 or less in consideration of economic feasibility of a manufacturing process. That is, if the polarization degree is higher than 0.98, an aspect ratio (width/height of the convex portion) of the unevenness of the polarization separation element needs to be increased. In this case, it becomes difficult to manufacture the polarization separation element and a manufacturing process may become complicated. The term "polarization degree" used in the present specification means an intensity of polarization with respect to an intensity of irradiated light and is calculated as shown in Equation 3 below.

$$[\text{Equation 3}]$$

$$\text{Polarization degree } D = (Tc-Tp)/(Tc+Tp)$$

Herein, Tc represents a transmittance of light polarized in an orientation perpendicular to the convex portion 2a and having a wavelength of 250 nm to 350 nm with respect to the polarization separation element and Tp represents a transmittance of light polarized in an orientation parallel to the convex portion 2a and having a wavelength of 250 nm to 350 nm with respect to the polarization separation element. As used herein, the term "parallel" means substantially parallel to a certain orientation and the term "perpendicular" means substantially perpendicular to a certain orientation.

Further, in an example, the ultraviolet ray polarization separation element may have c ranging from 1.3 to 10 and d ranging from 0.013 to 0.1 calculated by Equation 2 below.

[Equation 2]

$$(c+di)^2 = n_1^2 \times n_2^2 / ((1-W/P) \times n_2^2 + W \times n_1^2/P)$$

In Equation 2, i represents an imaginary unit, $n_1$ represents a refractive index of the dielectric material with respect to light having any one wavelength in an ultraviolet ray region of 250 nm to 350 nm, for example, light having a wavelength of 300 nm, $n_2$ represents a refractive index of the convex portion 2a with respect to light having any one wavelength in an ultraviolet ray region of 250 nm to 350 nm, for example, light having a wavelength of 300 nm, W represents a width of the convex portion 2a, and P represents a pitch of the convex portion 2a.

If the pitch P of the convex portion 2a of the unevenness 2 satisfies Equation 2, the ultraviolet ray polarization separation element may have an adequate transmittance sufficient to have an excellent polarization separation characteristic but an absorptivity may be decreased. Thus, the convex portion 2a may be formed to have a low height.

A height H of the convex portion 2a is not particularly limited but may be in a range of, for example, 20 nm to 300 nm, 50 nm to 200 nm, 100 nm to 150 nm, 150 nm to 250 nm, or 200 nm to 280 nm. If the height H of the unevenness 2 exceeds 300 nm, an amount of light absorbed is increased, and, thus, an absolute light amount required for photo-alignment may be decreased. Therefore, if the unevenness 2 is formed to have the height H in the above-described ranges, an amount of light absorbed is not great, and, thus, it is possible to manufacture an appropriate polarization separation element, which maintains an excellent ultraviolet ray transmittance and also achieves an excellent polarization separation characteristic. Further, as the height H of the unevenness 2 is increased at the same pitch P, an aspect ratio is increased, and, thus, it is possible to prevent deterioration of easiness in manufacturing a pattern.

A width W of the convex portion 2a is in a range of 50 nm to 150 nm, the width W is in a range of 50 nm to 80 nm.

In an example, a fill-factor of the unevenness 2 is in a range 0.4 to 0.7, 0.5 to 0.75, or 0.45. If the fill-factor of the unevenness satisfies the above range, it is possible to achieve a satisfactory polarization separation characteristic, and since an amount of light absorbed is not great, it is possible to prevent deterioration of a polarization characteristic of the polarization separation element. The term "fill-factor" of the unevenness used in the present specification means a ratio (W/P) of the width W of the convex portion to the pitch P of the convex portion.

Further, the polarization separation element example has a ranging from 0.74 to 10 and b ranging from 0.5 to 10 calculated by Equation 1 below and also has c ranging from 1.3 to 10 and d ranging from 0.013 to 0.1 calculated by Equation 2 below.

[Equation 1]

$$(a+bi)^2 = n_1^2 \times (1-W/P) + n_2^2 \times W/P$$

[Equation 2]

$$(c+di)^2 = n_1^2 \times n_2^2 / ((1-W/P) \times n_2^2 + W \times n_1^2/P)$$

In Equation 1 and Equation 2, i represents an imaginary unit, $n_1$ represents a refractive index of the dielectric material with respect to light having any one wavelength in an ultraviolet ray region of 250 nm to 350 nm, for example, light having a wavelength of 300 nm, $n_2$ represents a refractive index of the convex portion 2a with respect to light having any one wavelength in an ultraviolet ray region of 250 nm to 350 nm, for example, light having a wavelength of 300 nm, W represents a width of the convex portion 2a, and P represents a pitch of the convex portion 2a. In Equation 1 and Equation 2, if the a, b, c, and d satisfy the above-described ranges, respectively, the polarization separation element has a low pitch dependency of polarization characteristics. Thus, even if an unevenness having a pitch of 120 nm or more is formed on the polarization separation element, the polarization separation element can achieve superior polarization degree and extinction ratio even within a short wavelength region.

In an example, the substrate 1 provided in the polarization separation element and configured to support the unevenness may be made of a material such as quartz, ultraviolet ray transmission glass, PVA (Polyvinyl Alcohol), poly carbonate, and EVA (Ethylene Vinyl Acetate copolymer). For example, an ultraviolet transmittance of the substrate 1 may be 70% or more, 80% or more, or 90% or more. If the substrate 1 has a transmittance in the above range, an ultraviolet transmittance of the polarization separation element is also increased. Thus, it is possible to manufacture a photo-alignment film having an excellent photo-alignment speed.

The polarization separation element example may have an extinction ratio of 2 or more and may be, for example, 5 or more, 10 or more, 50 or more, 100 or more, or 500 or more. The upper limit of the extinction ratio is not particularly limited but may be 2000 or less, 1500 or less, or 1000 or less in consideration of a manufacturing process and economic feasibility. In an example, the polarization separation element may have an extinction ratio of 2 to 2000, and for example, 5 to 1500, 10 to 1500, 50 to 2000, 500 to 1500, or 100 to 2000 with a short wavelength in a light wavelength region of 250 nm to 350 nm. With the extinction ratio in the above-described range, the polarization separation element has an excellent polarization characteristic within a visible ray region and an ultraviolet ray region. For example, if a height of a pattern of the polarization separation element is increased, the extinction ratio may be increased to be more than 2000. However, actually, a polarization separation element having an extinction ratio of 2000 or more is useless in practical applications. Also, if the height is increased at the same pitch, an aspect ratio is increased, and, thus, productivity in a manufacturing process may be remarkably decreased. The term "extinction ratio" used in the present specification means Tc/Tp. A polarizing plate having a higher extinction ratio can be regarded as a polarizing plate having an excellent polarization characteristic. As described above, the Tc represents a transmittance of light polarized in an orientation perpendicular to the convex portion 2a and Tp represents a transmittance of light polarized in an orientation parallel to the convex portion 2a.

The present application also includes a method for manufacturing the above-described ultraviolet ray polarization separation element, and a method example for manufacturing the above-described ultraviolet ray polarization separation element may include forming the unevenness by forming the convex portion 2a on the substrate with silicon and introducing a dielectric material into the concave portion 2b formed by the formation of the convex portion 2a.

In the method example for manufacturing the above-described ultraviolet ray polarization separation element, the convex portion 2a may be formed by depositing silicon on the substrate. For example, the silicon may be deposited on the light transmission substrate by various vacuum evaporation coating methods publicly known in the art such as sputtering, chemical vapor deposition (CVD), low pressure CVD (LPCVD), plasma enhanced CVD (PECVD), atmospheric pressure CVD (APCVD), physical vapor deposition (PVD), thermal evaporation deposition, inductive thermal evaporation, electron-beam evaporation deposition, and atomic layer deposition, but the present application is not limited thereto.

In another method example, a silicon layer may be formed on the substrate by a solution process using a coating solution containing silicon nanoparticles. The solution process means a coating process using a solution. In an example, the solution process may include a sol-gel process.

In an example, a resist pattern may be formed on a silicon layer deposited on a substrate and the convex portion 2a may be formed by the resist pattern.

The resist pattern may be formed by various methods publicly known in the art such as photo lithography, nano imprint lithography, soft lithography, or interference lithography. The resist pattern may be formed by coating a resist material on the silicon layer and then exposing and developing it in a desired pattern by using a mask, but the present application is not limited thereto.

The convex portion 2a may be formed by means of a dry etching method or a wet etching method by using a previously formed resist pattern as a mask.

In an example, the wet etching method means a method for etching the silicon layer by using an etching solution. For example, the wet etching method may be performed by immersing the silicon layer in an etching solution using a strong alkaline solution such as potassium hydroxide (KOH) and TMAH (tetramethylammonium hydroxide), a strong acid solution such as HF, or a mixed solution of hydrofluoric acid (HF), nitric acid ($HNO_3$), and acetic acid ($CH_3COOH$). In an example, additives such as IPA (isopropylalcohol) or a surfactant may be added to the etching solution.

Typically, wet etching is carried out by means of so-called isotropic etching in which etching is carried out at the same etching rate in a vertical orientation and in a horizontal orientation. Therefore, it is not appropriate to form a pattern having a high aspect ratio. However, the polarization separation element does not require a high aspect ratio to obtain a polarization degree, and, thus, the convex portion 2a can be formed by means of the wet etching method. In this case, a processing cost is remarkably reduced and a processing rate is increased as compared with the dry etching method.

Meanwhile, in an example, the silicon layer may be etched selectively by means of isotropic etching or anisotropic etching depending on crystal orientation thereof. For example, if a wet etching method is performed to a silicon layer having crystal orientation in 100 orientations, the silicon layer is isotropically etched at the same etching rate in all of the orientations. If the silicon layer has crystal orientation in 110 orientations, when strong alkali such as potassium hydroxide (KOH) is used, the silicon layer is actually not etched in 111 orientations. As a result, the silicon layer may be anisotropically etched in a single orientation. Therefore, by using such a characteristic, it is possible to perform anisotropic etching with a high aspect ratio by means of wet etching.

In an example, the dry etching method means a method for etching the silicon layer by using a gas in a gaseous state. For example, the dry etching method may be performed by using dry etching methods publicly known in the art such as ion beam etching, RF sputtering etching, reaction ion etching, or plasma etching, but the present application is not limited thereto.

Further, if the silicon layer is etched by the dry etching method, in order to increase easiness of etching, after the silicon layer is formed and before the resist pattern is formed, a hard mask layer may be formed between the resist and the silicon layer. The hard mask layer is not particularly limited as long as it is made of a material which can be further etched than the resist but less etched than the silicon layer, and for example, Cr, Ni, SiN, $SiO_2$, and the like may be used. If the hard mask layer is additionally inserted, an etching rate is remarkably increased as compared with a case where only the resist is used as an etching mask. Thus, it is possible to easily manufacture a pattern having a high aspect ratio.

If the convex portion 2a is formed by using the resist pattern, the resist pattern may be removed. In the case of dry etching, the hard mask layer may also be removed after the convex portion 2a is formed. The resist pattern or the hard mask layer is not particularly limited and may be removed by a photoresist burning process at a temperature of, for example, about 300°C to about 400°C.

The present application also relates to a device including the polarization separation element, for example, a light irradiating device. A device example may include the polarization separation element and an apparatus for mounting a irradiation target object.

The polarization separation element may be a polarizing plate. For example, the polarizing plate may be used to generate light linearly polarized from light irradiated from a light source. For example, the polarizing plate may be provided within the device such that light irradiated from a light source is incident onto the polarizing plate and penetrates the polarizing plate, and then the light is irradiated again to a mask. Further, for example, if the device includes a light collecting plate, the polarizing plate may be positioned such that light irradiated from a light source and collected by the light collecting plate is incident onto the polarizing plate.

The polarizing plate is not particularly limited as long as it can generate light linearly polarized from light irradiated from a light source. As the polarizing plate, a glass plate arranged with Brewster's angle or a wire grid polarizing plate may be used.

Further, the device may further include a photo-alignment mask between the apparatus for mounting the irradiation target object and the polarization separation element.

For example, the mask may be provided so as to have a distance of 50 nm from a surface of the irradiation target object mounted on the apparatus. For example, the distance may be more than 0 mm, 0.001 mm or more, 0.01 mm or more, 0.1 mm or more, or 1 mm or more. Further, the distance may be 40 mm or less, 30 mm or less, 20 mm or less, or 10 mm or less. The distance between the surface of the irradiation target object and the mask may be set by various combinations of the above-described upper limits and lower limits.

A kind of the apparatus for mounting the irradiation target object is not particularly limited. There may be used all kinds of apparatuses designed to stably hold an irradiation target object while light is irradiated.

The device may further include a light source configured to irradiate light to the mask. The light source may be used without particular limitation as long as it is capable of irradiating light toward the mask. For example, if a photo-alignment film is aligned or a photoresist is exposed by using light guided by an opening of the mask, a high pressure mercury UV lamp, a metal halide lamp, or a gallium UV lamp may be used as a light source capable of irradiating ultraviolet rays.

The light source may include one or more light irradiating units. If multiple light irradiating units are included, the number of the light irradiating units or arrangement thereof is not particularly limited. If the light source includes multiple light irradiating units, the light irradiating units may form two or more rows, and a light irradiating unit positioned at any one of the two or more rows may be arranged so as to be crossed and overlapped with a light irradiating unit positioned at another row adjacent to the any one row.

When light irradiating units are crossed and overlapped with each other, a line connecting the center of a light irradiating unit positioned at any one row with the center of a light irradiating unit positioned at another row adjacent to the any one row may be formed in a perpendicular orientation or in a nonparallel orientation (in an inclined orientation at a certain angle) to each row and an irradiation area of the light irradiating units may be partially overlapped with each other in the perpendicular orientation to each row.

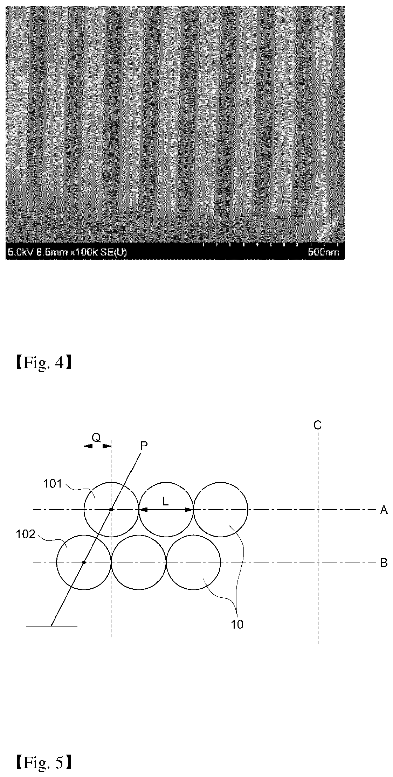

FIG. 4 shows an example of arrangement of the light irradiating units. In FIG. 4, multiple light irradiating units 10 are arranged so as to form two rows, i.e. a row A and a row B. If among the light irradiating units in FIG. 4, a light irradiating unit denoted by a reference numeral 101 is referred to as a first light irradiating unit and a light irradiating unit denoted by a reference numeral 102 is referred to as a second light irradiating unit, a line P connecting the centers of the first and second light irradiating units is formed so as not to be parallel to a line C formed in an orientation perpendicular to the orientation of the row A and the row B. Further, an irradiation area of the first light irradiating unit and an irradiation area of the second light irradiating unit are overlapped with each other by a range of Q in an orientation perpendicular to the orientation of the row A and the row B.

With the above-described arrangement, an amount of light irradiated from the light source can be maintained uniformly. An overlapped degree between any one light irradiating unit and another light irradiating unit, for example, a length of the Q in FIG. 4, is not particularly limited. For example, the overlapped degree may be about 1/3 or more to about 2/3 or less of a diameter of the light irradiating unit, for example, L in FIG. 4.

The device may further include one or more light collecting plates to adjust an amount of light irradiated from the light source. For example, the light collecting plate may be provided within the device such that light irradiated from the light source is incident onto the light collecting plate and collected by the light collecting plate, and then the collected light is irradiated to the mask. The light collecting plate may have a structure typically used in the art as long as it is configured to collect light irradiated from a light source. For example, the light collecting plate may include a lenticular lens layer or the like.

FIG. 5 shows an example of a light irradiating device. The device of FIG. 5 includes a light source 10, a light collecting plate 20, a polarizing plate 30, a mask 40, and an apparatus 60 for mounting an irradiation target object 50 arranged in sequence. In the device of FIG. 5, light irradiated from the light source 10 may be incident onto the light collecting plate 20 and collected by the collecting plate 20 and then the light may be incident again onto the polarizing plate 30. The light incident onto the polarizing plate 30 may be linearly polarized and may be incident again onto the mask 40. The light may be guided by an opening of the mask 40 and then may be irradiated to a surface of the irradiation target object 50.

The present application relates to a method for irradiating light. The method may be performed by using the above-described light irradiating device. For example, the method may include mounting the irradiation target object on the apparatus for mounting the irradiation target object, and irradiating light to the irradiation target object via the polarization separation element and the mask.

In an example, the irradiation target object may be a photo-alignment film. In this case, the method for irradiating light may be a method for manufacturing a photo-alignment film. For example, while the photo-alignment film is fixed onto the apparatus, linearly polarized light may be irradiated via the polarization separation element and the mask so as to orientationally order a photosensitive material contained in the photo-alignment film in a certain orientation, whereby a photo-alignment film having an orientation characteristic can be manufactured.

A kind of a photo-alignment film applied to the above method is not particularly limited. Various kinds of photo-alignment compounds which contain photosensitive residues and can be used to form a photo-alignment film have been publicly known in the art. All of such publicly known materials can be used to form a photo-alignment film. For example, as a photo-alignment compound, a compound ordered by trans-cis photoisomerization; a compound ordered by chain scission or photo-destruction such as photo-oxidation; a compound ordered by [2+2] cycloaddition, [4+4] cycloaddition or photo cross-linking such as photodimerization or photo polymerization; a compound ordered by photo-Fries rearrangement; or a compound ordered by ring opening/closure may be used. The compound ordered by trans-cis photoisomerization may include, for example, an azo compound such as sulfonated diazo dye or an azo polymer or a stilbenes compound. The compound ordered by photo-destruction may include, for example, cylcobutane-1,2,3,4-tetracarboxylic dianhydride, aromatic polysilane or polyester, polystyrene, or polyimide. Further, the compound ordered by photo cross-linking or photo polymerization may include a cinnamate compound, a coumarin compound, a cinnamamide compound, a tetrahydrophthalimide compound, a maleimide compound, a benzophenone compound or a diphenylacetylene compound, a compound containing chalconyl residues as photosensitive residues (hereinafter, referred to as "chalcon compound"), or a compound containing anthracenyl residues (hereinafter, referred to as "anthracenyl compound"). The compound ordered by photo-Fries rearrangement may include an aromatic compound such as a benzoate compound, a benzoamide compound, a methacrylamidoaryl methacrylate compound, or the like. The compound ordered by ring opening/closure may include a spiropyran compound ordered by ring opening/closure of a [4+2] $\pi$-electronic system. However, the present application is not limited thereto. The photo-alignment film can be manufactured by publicly known methods using such photo-alignment compounds. For example, a photo-alignment film may be formed on an appropriate support substrate by using the compounds and this photo-alignment film may be transferred by an apparatus for mounting an irradiation target object such as a roll to be applied to the above method.

In the above method, the photo-alignment film to which light is irradiated via the polarization separation element and the mask may be a photo-alignment film treated with a primary alignment process. The primary alignment process may be performed by irradiating an ultraviolet ray linearly polarized in a certain orientation by, for example, a polarization separation element onto a photo-alignment film, for example, onto the entire surface of the photo-alignment film before light is irradiated via a mask. When light is irradiated to the photo-alignment film treated with the primary photo-alignment process via the mask, if the light to be irradiated is polarized in a different orientation from a polarized orientation for the primary alignment process, the light is irradiated onto only a part of the photo-alignment film corresponding to an opening, and, thus, a photo-alignment compound is reordered. Thus, it is possible to manufacture a photo-alignment film in which an ordered orientation of the photo-alignment compound is patterned.

In order to align the photo-alignment film, for example, if a linearly polarized ultraviolet ray is irradiated one or more times, alignment of the alignment film is determined by a polarized orientation of light finally irradiated. Therefore, after a primary alignment process by irradiating an ultraviolet ray linearly polarized in a certain orientation by a polarization separation element to a photo-alignment film, if the photo-alignment film is exposed to light linearly polarized in a different orientation from the orientation for the primary alignment process, an orientation of the alignment film is changed only at a certain area to which light is irradiated so as to be different from the orientation for the primary alignment process.

Therefore, a pattern including at least a first orientation region having a first alignment orientation and a second alignment region having a second alignment orientation different from the first alignment orientation or two or more alignment regions having different alignment orientations may be formed on a photo-alignment film.

In an example, an angle formed by a polarization axis of the linearly polarized ultraviolet ray irradiated during the primary alignment process and a polarization axis of the linearly polarized ultraviolet ray irradiated during a secondary alignment process performed via a mask after the primary alignment process may be a vertical angle. As used herein, the term "vertical" means substantially vertical to a certain orientation. In this way, the photo-alignment film manufactured by controlling the polarization axes of the lights irradiated during the primary and secondary alignment processes can be used for, for example, an optical filter that can achieve a stereoscopic image.

For example, an optical filter may be manufactured by forming a liquid crystal layer on the photo-alignment film formed as described above. A method for forming a liquid crystal layer is not particularly limited. For example, a liquid crystal layer may be formed by coating and aligning a liquid crystal compound which can be cross-linked or polymerized by light on the photo-alignment film and irradiating light onto the liquid crystal compound layer to be cross-linked or polymerized. Through this process, the liquid crystal compound layer can be aligned and fixed along alignment of the photo-alignment film, so that a liquid crystal film including two or more regions having different alignment orientations can be manufactured.

A kind of the liquid crystal compound coated on the photo-alignment film is not particularly limited and may be selected appropriately depending on a purpose of use of an optical filter. For example, the optical filter is a filter for achieving a stereoscopic image, the liquid crystal compound can be aligned according to an alignment pattern of the alignment film under the liquid crystal compound and can form a liquid crystal polymer layer having a phase difference of $\lambda/4$ by photo cross-linking or photo polymerization. The term "phase difference of $\lambda/4$" means a characteristic capable of delaying a phase by 1/4 of a wavelength of incident light. For example, if such a liquid crystal compound is used, it is possible to manufacture an optical filter capable of dividing incident light into left-circularly polarized light and right-circularly polarized light.

The method for coating and aligning a liquid crystal compound, i.e. ordering the liquid crystal compound according to an alignment pattern of an alignment film under the liquid crystal compound or the method for cross-linking or polymerizing the ordered liquid crystal compound is not particularly limited. For example, alignment may be carried out such that a liquid crystal layer can be maintained at a temperature appropriate for a liquid crystal compound to exhibit liquid crystalline properties depending on a kind of the liquid crystal compound. Further, cross-linking and polymerization may be carried out by irradiating light capable of inducing appropriate cross-linking or polymerization to the liquid crystal layer depending on a kind of the liquid crystal compound.

## [Effect of the Invention]

An ultraviolet ray polarization separation element according to the present application has superior durability to ultraviolet rays and heat, and involves a simple manufacturing process due to a low pitch dependency of polarizing characteristics. Further, the polarization separation element according to the present application can achieve superior polarization degree and extinction ratio even within a short wavelength region.

## [Description of Drawings]

FIG. 1 is a cross-sectional view that illustrates a cross section of a polarization separation element example.

FIG. 2 is a schematic diagram that illustrates an upper an upper surface of a polarization separation element example.

FIG. 3 is a photo of a polarization separation element example when viewed from the top.

FIG. 4 illustrates an arrangement example of light irradiating devices.

FIG. 5 illustrates a light irradiating device example.

FIG. 6 is a graph that shows a result of measuring transmittances of a silicon polarization separation element example according to Experimental Example 1.

FIG. 7 is a graph that shows a result of measuring transmittances of an aluminum polarization separation element example according to Experimental Example 2.

FIG. 8 is a photo that shows a result of a change in aluminum totally oxidized and turned to be transparent in an aluminum polarization separation element example according to Experimental Example 3.

FIG. 9 is a graph that shows polarization characteristics of a silicon polarization separation element and an aluminum polarization separation element.

**[Best Mode]**

Hereinafter, the above-described matters will be explained in detail with reference to Example and Comparative Example, but a scope of a polarization separation element of the present application is not limited to Example provided below.

## Manufacturing of polarization separation element

### Example

By performing an ultrasonic cleaning process onto quartz glass in acetone and IPA (Iso-Propyl Alcohol), respectively, at 60°C for 20 minutes, foreign substances were removed from a surface of the quartz glass. Then, a silicon thin film was deposited to a thickness of 50 nm on the quartz glass at a speed of 1 Å/sec by E-beam evaporation. On the deposited silicon thin film, mr-8010r manufactured by Micro Resist Technology GmbH was spin-coated to a thickness of 100 nm and baked at 95°C for 1 minute. Thereafter, an imprint process was carried out by using an imprinting master having a pitch of 150 nm. During the imprint process, a temperature of a press was 160°C. The imprint process was held at 40 Bar for 3 minutes and then a cooling process was carried out for 2 minutes and a demolding process was carried out at 100°C. Then, the silicon was dry etched by using an ICP RIE device. Thereafter, the imprint resist was removed by using acetone as an organic solvent. As a result, a silicon polarization separation element including a convex portion having a width W of 75 nm and a pitch P of 150 nm was manufactured.

### Comparative Example

By performing an ultrasonic cleaning process onto quartz glass in acetone and IPA, respectively, at 60°C for 20 minutes, foreign substances were removed from a surface of the quartz glass. Then, an aluminum thin film was deposited to a thickness of 150 nm on the quartz glass at a speed of 1 Å/sec by E-beam evaporation. On the deposited aluminum thin film, mr-8010r manufactured by Micro Resist Technology GmbH was spin-coated to a thickness of 100 nm and baked at 95°C for 1 minute. Thereafter, an imprint process was carried out by using an imprinting master having a pitch of 120 nm. During the imprint process, a temperature of a press was 160°C. The imprint process was held at 40 Bar for 3 minutes and then a cooling process was carried out for 2 minutes and a demolding process was carried out at 100°C. Then, the aluminum was dry etched by using an ICP RIE device. Thereafter, the imprint resist was removed by using acetone as an organic solvent. As a result, an aluminum polarization separation element including a convex portion having a width W of 60 nm and a pitch P of 120 nm was manufactured.

### Test Example

Properties of the polarization separation elements manufactured in Example and Comparative Example were evaluated by the following method.

### Measurement method 1: Measurement of optical constant of convex portion

Light having a wavelength of 300 nm was irradiated onto the polarization separation elements manufactured in Example and Comparative Example by using a spectroscopic ellipsometry device by means of oscillation modeling so as to measure optical constants of convex portions of the polarization separation elements.

### Calculation of effective refractive index of polarization separation element

By substituting W and P values of the polarization separation elements of Example and Comparative Example, a refractive index $n_1$ of a dielectric material (air), and the measured optical constants $n_2$ of the convex portions of the polarization separation elements in Equation 1 and Equation 2, effective refractivities were calculated. A result thereof was as shown in Table 1 below.

[Table 1]

| Wavelength (nm) | Material of convex portion | Real optical constant | Effective refractive index | |
|---|---|---|---|---|
| | | $n_2$ | $n_\parallel$ (a+b$i$) | $n_\perp$ (c+d$i$) |
| 250 | Si | 1.7 + 3.68i | 1.24 + 2.52i | 1.44 + 0.035i |
| | Al | 0.20 + 3.0i | 0.15 + 2.0i | 1.50 + 0.012i |
| 275 | Si | 1.87 + 5.00i | 1.87 + 3.48i | 1.44 + 0.040i |
| | Al | 0.23 + 3.3i | 0.17 + 2.22i | 1.48 + 0.010i |
| 300 | Si | 5.0 + 4.09i | 3.58 + 2.86i | 1.41 + 0.017i |
| | Al | 0.28 + 3.64i | 0.21 + 2.48i | 1.47 + 0.009i |
| 325 | Si | 5.13 + 3.18i | 3.67 + 2.22i | 1.41 + 0.017i |
| | Al | 0.33 + 3.95i | 0.24 + 2.70i | 1.46 + 0.008i |
| 350 | Si | 5.5 + 2.90i | 3.94 + 2.02i | 1.40 + 0.017i |
| | Al | 0.39 + 4.3i | 0.28 + 2.96i | 1.45 + 0.0074i |

**Calculation of extinction ratio**

Based on transmittances measured at respective wavelength bands, extinction ratios (Tc/Tp) were calculated. Extinction ratios at respective wavelength bands of Example and Comparative Example were compared as shown in Table 2.

[Table 2]

| Extinction ratios of polarization separation elements made of Al and light absorbing material | | | | | |
|---|---|---|---|---|---|
| | Extinction ratio at each wavelength band | | | | |
| | 250 nm | 275 nm | 300 nm | 325 nm | 350 nm |
| Example (Si) | 34.71716 | 204.9879 | 207.9338 | 683.9417 | 1762.759 |
| Comparative Example (Al) | 0.233146 | 6.649053 | 6.649053 | 89.0692 | 134.102 |

**Evaluation of durability**

**(1) Experimental Example 1**

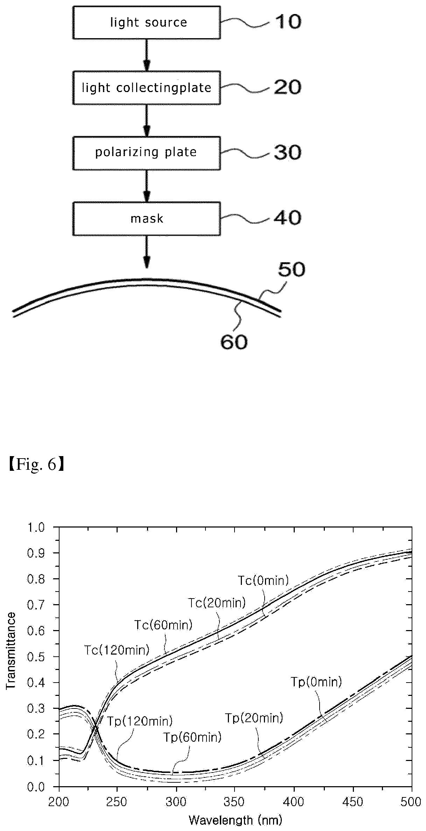

The silicon polarization separation element manufactured in Example was immersed in water for an accelerated test and heated at 60°C for 20 minutes, 60 minutes, and 120 minutes, respectively. Then, by layering two sheets of unused aluminum polarization separation elements and inserting the layered sheets into a transmittance measurement device so as to generate a polarized light source, an orientation of the silicon polarization separation element was set to be perpendicular and parallel to a polarized orientation and then Tp and Tc were measured. Herein, Tp represents a transmittance of light polarized in an orientation parallel to the convex portion and Tc represents a transmittance of light polarized in an orientation perpendicular to the convex portion. A measurement result was shown in FIG. 6.

**(2) Experimental Example 2**

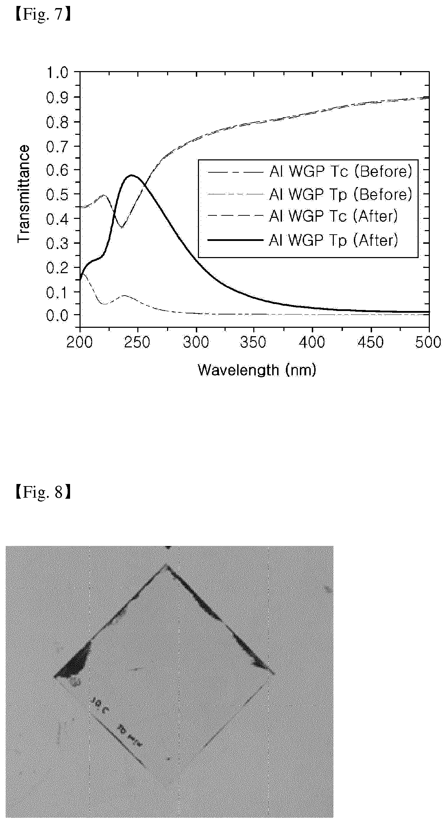

An ultraviolet lamp was irradiated to the aluminum polarization separation element manufactured in Comparative Example for 500 hours, and in the same manner as Experimental Example 1, Tp and Tc were measured before and after the irradiation. A measurement result was shown in FIG. 7.

**(3) Experimental Example 3**

The aluminum polarization separation element manufactured in Comparative Example was immersed in water and heated at 60°C for 30 minutes. It was observed that aluminum was totally oxidized and turned to be transparent and the aluminum polarization separation element lost a function as a polarization separation element accordingly. A result was shown in FIG. 8.

### Evaluation of polarization characteristic depending on pitch

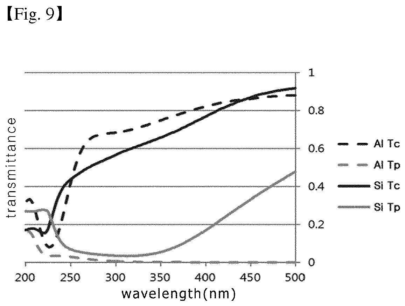

Tc and Tp of the silicon polarization separation element manufactured in Example and the aluminum polarization separation element manufactured in Comparative Example were measured by using a spectrometer manufactured by N&K Technology, Co., Ltd. A result was shown in FIG. 9.

As can be seen from Table 1, if a convex portion is formed by using silicon as shown in Example, according to $n_{\parallel}$ all a values of Al in Comparative Example are lower than 0.74, whereas all a values of Si in Example are equal to or higher than 0.74 and higher than those of Al, and b values of Si are higher than those of Al. Further, in the case of Si, refractivities are in a range of 1 to 10 and extinction coefficients satisfy a range of 1 to 10.

As can be seen from Table 2, although the polarization separation element manufactured in Example is manufactured so as to have a pitch of 150 nm higher than a pitch (120 nm) of the polarization separation element manufactured in Comparative Example, an extinction ratio of the polarization separation element manufactured in Example was remarkably high at an ultraviolet wavelength band.

Further, referring to Experimental Examples 1 to 3 and FIGS. 6 to 8, if used for a long time in an ultraviolet ray region, the silicon polarization separation element maintains Tp and Tc without an additional change. However, in the aluminum polarization separation element, Tp is greatly increased and aluminum is totally oxidized.

Furthermore, referring to FIG. 9, in the case of a polarization separation element including a convex portion formed of silicon to have a pitch of 150 nm is manufactured so as to have a greater pitch but maintains a polarization separation characteristic at a similar level as compared with a polarization separation element including a convex portion formed of aluminum to have a pitch of 120 nm. Moreover, it is easy to manufacture the polarization separation element including the convex portion formed of silicon since a height (50 nm) of the convex portion of the polarization separation element including the convex portion formed of silicon can be lower than a height (150 nm) of the convex portion of the polarization separation element including the convex portion formed of aluminum.

### [Description of Main Reference Numerals of Drawings]

1: Substrate

2: Unevenness

2a: Convex portion

2b: Concave portion

10, 101, 102: Light irradiating units

20: Light collecting plate

30: Polarizing plate

40: Mask

50: Irradiation target object

60: Apparatus for mounting an irradiation target object

### Claims

1. An ultraviolet ray polarization separation element comprising:

   a substrate; and

an unevenness which is formed on the substrate and which includes a convex portion containing silicon and a concave portion where a dielectric material is present, and having a ranging from 0.74 to 10 and b ranging from 0.5 to 10 calculated by Equation 1 below, and

wherein the convex portion has a pitch of 50 nm to 150nm and a width of 50nm to 80nm ,and

wherein a ratio (W/P) of the width W of the convex portion to the pitch P of the convex portion is in a range of 0.4 to 0.7:

[Equation 1]

$$(a+bi)^2 = n_1^2 \times (1-W/P) + n_3^2 \times W/P$$

wherein in Equation 1, i represents an imaginary unit, $n_1$ represents a refractive index of the dielectric material with respect to light having a wavelength of 300 nm, $n_2$ represents a refractive index of the convex portion with respect to light having a wavelength of 300 nm, W represents a width of the convex portion, and P represents a pitch of the convex portion.

2. An ultraviolet ray polarization separation element comprising:

a substrate; and

an unevenness which is formed on the substrate and which includes a convex portion containing silicon and a concave portion where a dielectric material is present, and having c ranging from 1.3 to 10 and d ranging from 0.013 to 0.1 calculated by Equation 2 below, and

wherein the convex portion has a pitch of 50 nm to 150nm and a width of 50nm to 80nm, and

wherein a ratio (W/P) of the width W of the convex portion to the pitch P of the convex portion is in a range of 0.4 to 0.7:

[Equation 2]

$$(c+di)^2 = n_1^2 \times n_2^2 / ((1-W/P) \times n_2^2 + W \times n_1^2/P)$$

wherein in Equation 2, i represents an imaginary unit, $n_1$ represents a refractive index of the dielectric material with respect to light having a wavelength of 300 nm, $n_2$ represents a refractive index of the convex portion with respect to light having a wavelength of 300 nm, W represents a width of the convex portion, and P represents a pitch of the convex portion.

3. The ultraviolet ray polarization separation element of claim 1, further having c ranging from 1.3 to 10 and d ranging from 0.013 to 0.1 calculated by Equation 2 below:

[Equation 2]

$$(c+di)^2 = n_1^2 \times n_2^2 / ((1-W/P) \times n_2^2 + W \times n_1^2/P)$$

wherein in Equations 2, i represents an imaginary unit, $n_1$ represents a refractive index of the dielectric material with respect to light having a wavelength of 300 nm, $n_2$ represents a refractive index of the convex portion with respect to light having a wavelength of 300 nm, W represents a width of the convex portion, and P represents a pitch of the convex portion.

4. The ultraviolet ray polarization separation element of claim 1, wherein a refractive index of the dielectric material with respect to light having a wavelength of 250 nm to 350 nm is in a range of 1 to 3.

5. The ultraviolet ray polarization separation element of claim 1, wherein a refractive index of the convex portion with respect to light having a wavelength of 250 nm to 350 nm is in a range of 1 to 10.

6. The ultraviolet ray polarization separation element of claim 1, wherein the convex portion has a light absorption characteristic with an extinction coefficient of 0.5 to 10.

7. The ultraviolet ray polarization separation element of claim 1, wherein the convex portion is doped with one or more selected from the group consisting of boron, carbon, nitrogen, aluminum, phosphorous, gallium, germanium, arsenic, chrome, and nickel.

8. The ultraviolet ray polarization separation element of claim 1, wherein D calculated by Equation 3 below is in a range of 0.67 to 0.98:

$$[\text{Equation 3}]$$

$$D = (Tc-Tp)/(Tc+Tp)$$

wherein in Equation 3, Tc represents a transmittance of light polarized in an orientation perpendicular to the convex portion and having a wavelength of 250 nm to 350 nm with respect to the polarization separation element and Tp represents a transmittance of light polarized in an orientation parallel to the convex portion and having a wavelength of 250 nm to 350 nm with respect to the polarization separation element.

9. The ultraviolet ray polarization separation element of claim 1, wherein R calculated by Equation 4 below is in a range of 2 to 2000:

$$[\text{Equation 4}]$$

$$R = Tc/Tp$$

wherein in Equation 4, Tc represents a transmittance of light polarized in an orientation perpendicular to the convex portion and having a wavelength of 250 nm to 350 nm with respect to the polarization separation element and Tp represents a transmittance of light polarized in an orientation parallel to the convex portion and having a wavelength of 250 nm to 350 nm with respect to the polarization separation element.

10. A method for manufacturing an ultraviolet ray polarization separation element of any one of claims 1 or 2, the method comprising:
forming an unevenness by forming a convex portion on a substrate with silicon and introducing a dielectric material into a concave portion formed by the formation of the convex portion.

11. A light irradiating device comprising:

an apparatus for mounting an irradiation target object; and
the ultraviolet ray polarization separation element of any one of claims 1 or 2.

12. The light irradiating device of claim 15, further comprising:
a photo-alignment mask between the apparatus for mounting an irradiation target object and the polarization separation element.

**Patentansprüche**

1. Ultraviolettstrahl-Polarisationstrennelement, das Folgendes umfasst:

ein Substrat; und
eine Unebenheit, die auf dem Substrat gebildet ist und die einen Silizium enthaltenden konvexen Abschnitt und einen konkaven Abschnitt, wo ein dielektrisches Material vorhanden ist, umfasst, und die a im Bereich von 0,74 bis 10 und b im Bereich von 0,5 bis 10, berechnet nach untenstehender Gleichung 1, aufweist, und
wobei der konvexe Abschnitt ein Abstandsmaß von 50 nm bis 150 nm und eine Breite von 50 nm bis 80 nm aufweist, und

wobei ein Verhältnis (W/P) der Breite W des konvexen Abschnitts zu dem Abstandsmaß P des konvexen Abschnitts in einem Bereich von 0,4 bis 0,7 liegt:

[Gleichung 1]

$$(a+bi)^2 = n_1^2 \text{ x } (1 - W/P) + n_2^2 \text{ x } W/P$$

wobei in Gleichung 1, i für eine imaginäre Einheit steht, $n_1$ für einen Brechungsindex des dielektrischen Materials in Bezug auf Licht mit einer Wellenlänge von 300 nm steht, $n_2$ für einen Brechungsindex des konvexen Abschnitts in Bezug auf Licht mit einer Wellenlänge von 300 nm steht, W für eine Breite des konvexen Abschnitts steht und P für ein Abstandsmaß des konvexen Abschnitts steht.

2. Ultraviolettstrahl-Polarisationstrennelement, das Folgendes umfasst:

ein Substrat; und
eine Unebenheit, die auf dem Substrat gebildet ist und die einen Silizium enthaltenden konvexen Abschnitt und einen konkaven Abschnitt, wo ein dielektrisches Material vorhanden ist, umfasst, und die c im Bereich von 1,3 bis 10 und d im Bereich von 0,013 bis 0,1, berechnet nach untenstehender Gleichung 2, aufweist, und
wobei der konvexe Abschnitt ein Abstandsmaß von 50 nm bis 150 nm und eine Breite von 50 nm bis 80 nm aufweist, und
wobei ein Verhältnis (W/P) der Breite W des konvexen Abschnitts zu dem Abstandsmaß P des konvexen Abschnitts in einem Bereich von 0,4 bis 0,7 liegt:

[Gleichung 2]

$$(c+di)^2 = n_1^2 \text{ x } n_2^2 \text{ / } (1 - W/P) \text{ x } n_2^2 + W \text{ x } n_1^2/P$$

wobei in Gleichung 2, i für eine imaginäre Einheit steht, $n_1$ für einen Brechungsindex des dielektrischen Materials in Bezug auf Licht mit einer Wellenlänge von 300 nm steht, $n_2$ für einen Brechungsindex des konvexen Abschnitts in Bezug auf Licht mit einer Wellenlänge von 300 nm steht, W für eine Breite des konvexen Abschnitts steht und P für ein Abstandsmaß des konvexen Abschnitts steht.

3. Ultraviolett-Polarisationstrennelement nach Anspruch 1, das weiter c im Bereich von 1,3 bis 10 und d im Bereich von 0,013 bis 0,1, berechnet nach untenstehender Gleichung 2 aufweist:

[Gleichung 2]

$$(c+di)^2 = n_1^2 \text{ x } n_2^2 \text{ / } ((1 - W/P) \text{ x } n_2^2 + W \text{ x } n_1^2/P$$

wobei in Gleichung 2, i für eine imaginäre Einheit steht, $n_1$ für einen Brechungsindex des dielektrischen Materials in Bezug auf Licht mit einer Wellenlänge von 300 nm steht, $n_2$ für einen Brechungsindex des konvexen Abschnitts in Bezug auf Licht mit einer Wellenlänge von 300 nm steht, W für eine Breite des konvexen Abschnitts steht und P für ein Abstandsmaß des konvexen Abschnitts steht.

4. Ultraviolettstrahl-Polarisationstrennelement nach Anspruch 1, wobei ein Brechungsindex des dielektrischen Materials in Bezug auf Licht mit einer Wellenlänge von 250 nm bis 350 nm in einem Bereich von 1 bis 3 liegt.

5. Ultraviolettstrahl-Polarisationstrennelement nach Anspruch 1, wobei ein Brechungsindex des konvexen Abschnitts in Bezug auf Licht mit einer Wellenlänge von 250 nm bis 350 nm in einem Bereich von 1 bis 10 liegt.

6. Ultraviolettstrahl-Polarisationstrennelement nach Anspruch 1, wobei der konvexe Abschnitt eine Lichtabsorptionscharakteristik mit einem Extinktionskoeffizienten von 0,5 bis 10 aufweist.

**7.** Ultraviolettstrahl-Polarisationstrennelement nach Anspruch 1, wobei der konvexe Abschnitt mit einem oder mehreren dotiert ist, die aus der aus Bor, Kohlenstoff, Stickstoff, Aluminium, Phosphor, Gallium, Germanium, Arsen, Chrom und Nickel bestehenden Gruppe ausgewählt sind.

**8.** Ultraviolettstrahl-Polarisationstrennelement nach Anspruch 1, wobei D, berechnet nach untenstehender Gleichung 3, in einem Bereich von 0,67 bis 0,98 liegt:

$$[\text{Gleichung 3}]$$

$$D = (Tc - Tp)/(Tc + Tp)$$

wobei in Gleichung 3 Tc für einen Durchlassgrad von in einer zu dem konvexen Abschnitt senkrechten Orientierung polarisiertem und eine Wellenlänge von 250 nm bis 350 nm aufweisendem Licht in Bezug auf das Polarisationstrennelement steht und Tp für einen Durchlassgrad von in einer zu dem konvexen Abschnitt senkrechten Orientierung polarisiertem und eine Wellenlänge von 250 nm bis 350 nm aufweisendem Licht in Bezug auf das dielektrische Material steht.

**9.** Ultraviolettstrahl-Polarisationstrennelement nach Anspruch 1, wobei R, berechnet nach untenstehender Gleichung 4, in einem Bereich von 2 bis 2000 liegt:

$$[\text{Gleichung 4}]$$

$$R = Tc/Tp$$

wobei in Gleichung 4 Tc für einen Durchlassgrad von in einer zu dem konvexen Abschnitt senkrechten Orientierung polarisiertem und eine Wellenlänge von 250 nm bis 350 nm aufweisendem Licht in Bezug auf das Polarisationstrennelement steht und Tp für einen Durchlassgrad von in einer zu dem konvexen Abschnitt senkrechten Orientierung polarisiertem und eine Wellenlänge von 250 nm bis 350 nm aufweisendem Licht in Bezug auf das dielektrische Material steht.

**10.** Verfahren zum Herstellen eines Ultraviolettstrahl-Polarisationstrennelements nach einem der Ansprüche 1 oder 2, wobei das Verfahren Folgendes umfasst:
Bilden einer Unebenheit durch Bilden eines konvexen Abschnitts auf einem Substrat mit Silizium und Einbringen eines dielektrischen Materials in einen durch das Bilden des konvexen Abschnitts gebildeten konvexen Abschnitt.

**11.** Lichtbestrahlungsvorrichtung, die Folgendes umfasst:

eine Einrichtung zum Befestigen eines Bestrahlungszielobjekts; und
das Ultraviolettstrahl-Polarisationstrennelement nach einem der Ansprüche 1 oder 2.

**12.** Lichtbestrahlungsvorrichtung nach Anspruch 15, die weiter Folgendes umfasst:
eine Photoalignment-Maske zwischen der Einrichtung zum Befestigen eines Bestrahlungszielobjekts und dem Polarisationstrennelement.

## Revendications

**1.** Élément de séparation à polarisation de rayons ultraviolets comprenant :

un substrat ; et
une irrégularité qui est formée sur le substrat et qui inclut une partie convexe contenant du silicium et une partie concave où un matériau diélectrique est présent et ayant a qui est compris entre 0,74 et 10, et b qui est compris entre 0,5 et 10, calculés par l'Équation 1 ci-dessous, et
dans lequel la partie convexe a un pas compris entre 50 nm et 150 nm et une largeur comprise entre 50 nm et 80 nm, et
dans lequel un rapport (W/P) de la largeur W de la partie convexe au pas P de la partie convexe est compris entre 0,4 et 0,7 :

$$[\text{Équation 1}]$$

$$(a+b_i)^2 - n_1^2 \times (1-W/P) + n_2^2 \times W/P$$

dans lequel dans l'Équation 1, i représente une unité imaginaire, $n_1$ représente un indice de réfraction du matériau diélectrique par rapport à une lumière ayant une longueur d'onde de 300 nm, $n_2$ représente un indice de réfraction de la partie convexe par rapport à une lumière ayant une longueur d'onde de 300 nm, W représente une largeur de la partie convexe et P représente un pas de la partie convexe.

2. Élément de séparation à polarisation de rayons ultraviolets comprenant :

un substrat ; et
une irrégularité qui est formée sur le substrat et qui inclut une partie convexe contenant du silicium et une partie concave où un matériau diélectrique est présent, et ayant c qui est compris entre 1,3 et 10, et d qui est compris entre 0,013 et 0,1, calculés par l'Équation 2 ci-dessous, et
dans lequel la partie convexe a un pas compris entre 50 nm et 150 nm et une largeur comprise entre 50 nm et 80 nm, et
dans lequel un rapport (W/P) de la largeur W de la partie convexe au pas P de la partie convexe est compris entre 0,4 et 0,7 :

$$[\text{Équation 2}]$$

$$(c+di)^2 = n_1^2 \times n_2^2 / ((1-W/P) \times n_2^2 + W \times n_1^2/P)$$

dans lequel dans l'Equation 2, i représente une unité imaginaire, $n_1$ représente un indice de réfraction du matériau diélectrique par rapport à une lumière ayant une longueur d'onde de 300 nm, $n_2$ représente un indice de réfraction de la partie convexe par rapport à une lumière ayant une longueur d'onde de 300 nm, W représente une largeur de la partie convexe et P représente un pas de la partie convexe.

3. Élément de séparation à polarisation de rayons ultraviolets selon la revendication 1, ayant en outre c compris entre 1,3 et 10, et d compris entre 0,013 et 0,1 calculés par l'Équation 2 ci-dessous :

$$[\text{Équation 2}]$$

$$(c+di)^2 = n_1^2 \times n_2^2 / ((1-W/P) \times n_2^2 + W \times n_1^2/P)$$

dans lequel dans les Équations 2, i représente une unité imaginaire, $n_1$ représente un indice de réfraction du matériau diélectrique par rapport à une lumière ayant une longueur d'onde de 300 nm, $n_2$ représente un indice de réfraction de la partie convexe par rapport à une lumière ayant une longueur d'onde de 300 nm, W représente une largeur de la partie convexe et P représente un pas de la partie convexe.

4. Élément de séparation à polarisation de rayons ultraviolets selon la revendication 1, dans lequel un indice de réfraction du matériau diélectrique par rapport à une lumière ayant une longueur d'onde comprise entre 250 nm et 350 nm est compris entre 1 et 3.

5. Élément de séparation à polarisation de rayons ultraviolets selon la revendication 1, dans lequel un indice de réfraction de la partie convexe par rapport à une lumière ayant une longueur d'onde comprise entre 250 nm et 350 nm est compris entre 1 et 10.

6. Élément de séparation à polarisation de rayons ultraviolets selon la revendication 1, dans lequel la partie convexe a une caractéristique d'absorption de lumière avec un coefficient d'extinction compris entre 0,5 et 10.

7. Élément de séparation à polarisation de rayons ultraviolets selon la revendication 1, dans lequel la partie convexe est dopée avec un ou plusieurs éléments sélectionnés dans le groupe constitué par le bore, le carbone, l'azote, l'aluminium, le phosphore, le gallium, le germanium, l'arsenic, le chrome et le nickel.

8. Élément de séparation à polarisation de rayons ultraviolets selon la revendication 1, dans lequel D calculé par l'Équation 3 ci-dessous est compris entre 0,67 et 0,98 :

$$[\text{Équation 3}]$$

$$D - (Tc-Tp)/(Tc+Tp)$$

dans lequel dans l'Équation 3, Tc représente une transmittance de lumière polarisée dans une orientation perpendiculaire à la partie convexe et ayant une longueur d'onde comprise entre 250 nm et 350 nm par rapport à l'élément de séparation à polarisation et Tp représente une transmittance de lumière polarisée dans une orientation parallèle à la partie convexe et ayant une longueur d'onde comprise entre 250 nm et 350 nm par rapport à l'élément de séparation à polarisation.

9. Élément de séparation à polarisation de rayons ultraviolets selon la revendication 1, dans lequel R calculé par l'Équation 4 ci-dessous est compris entre 2 et 2000 :

$$[\text{Équation 4}]$$

$$R = Tc/Tp$$

dans lequel dans l'Équation 4, Tc représente une transmittance de lumière polarisée dans une orientation perpendiculaire à la partie convexe et ayant une longueur d'onde comprise entre 250 nm et 350 nm par rapport à l'élément de séparation à polarisation et Tp représente une transmittance de lumière polarisée dans une orientation parallèle à la partie convexe et ayant une longueur d'onde comprise entre 250 nm et 350 nm par rapport à l'élément de séparation à polarisation.

10. Procédé de fabrication d'un élément de séparation à polarisation de rayons ultraviolets selon l'un quelconque des revendications 1 ou 2, le procédé consistant à :

former une irrégularité en formant une partie convexe sur un substrat avec du silicium, et
introduire un matériau diélectrique dans une partie concave formée par la formation de la partie convexe.

11. Dispositif de rayonnement lumineux comprenant :

un appareil pour monter un objet cible du rayonnement ; et
l'élément de séparation à polarisation de rayons ultraviolets selon l'un quelconque des revendications 1 ou 2.

12. Dispositif de rayonnement lumineux selon la revendication 15, comprenant en outre :
un masque de photo-alignement entre l'appareil de montage d'un objet cible du rayonnement et l'élément de séparation à polarisation.

【Fig. 1】

【Fig. 2】

【Fig. 3】

【Fig. 4】

【Fig. 5】

【Fig. 6】

【Fig. 7】

【Fig. 8】

【Fig. 9】

**EP 2 790 044 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20020035587